# EUROPÄISCHE PATENTSCHRIFT

(11) **EP 2 132 276 B1**
(45) Veröffentlichungstag und Bekanntmachung des Hinweises auf die Patenterteilung: **25.01.2012**
(21) Anmeldenummer: 07847778.3
(22) Anmeldetag: 04.12.2007
(51) Int. Cl.: C09J 175/00, C09J 175/16, C08G 18/67, C08G 18/81, C08F 290/06

(54) **STRAHLENVERNETZENDER SCHMELZKLEBSTOFF**
RADIATION CROSS-LINKING MELT ADHESIVE
ADHÉSIF FUSIBLE RÉTICULABLE PAR RAYONNEMENT

(30) Priorität: 30.03.2007 DE 102007015801
(43) Veröffentlichungstag der Anmeldung: 16.12.2009
(73) Patentinhaber: Henkel AG & Co. KGaA, 40589 Düsseldorf (DE)
(72) Erfinder: MÖLLER, Thomas, 40593 Düsseldorf (DE); ERB, Volker, 40595 Düsseldorf (DE); LACK, Melanie, 40221 Düsseldorf (DE)
(86) Internationale Anmeldenummer: PCT/EP2007/063276
(87) Internationale Veröffentlichungsnummer: WO 2008/119399

(56) Entgegenhaltungen:
- EP-A- 0 305 175
- EP-A- 1 262 502
- US-A- 4 820 745
- US-A1- 2003 032 691

## Beschreibung

Die Erfindung betrifft strahlenvernetzbare Schmelzklebstoffe auf Basis von reaktiven Polyurethanen, die beispielsweise zum Verkleben von Etiketten auf Behältern, wie Flaschen, Dosen, Kartonagen, eingesetzt werden können.

Strahlenhärtende Klebstoffe sind allgemein bekannt. Dabei werden beispielsweise fließfähige, häufig dünnviskose Klebstoffe durch radikalische oder kationische Polymerisation vernetzt und es entstehen Haftklebstoffe oder feste verklebte Schichten. Die Polymere müssen den Substratoberflächen angepasst werden, um eine gute Haftung sicherzustellen.

Ein besonders Anwendungsgebiet sind Klebstoffe zum Verkleben von Kunststoffetiketten auf Verpackungen, beispielsweise Flaschen oder Dosen. Um eine gute Haftung auf dem Substrat sicherzustellen werden häufig hülsenförmige Schrumpfetiketten eingesetzt. Maschinen und Verfahren sind bekannt, solche Rund-um-Etiketten auf rotationssymmetrische Gegenstände aufzubringen. Dabei handelt es sich um ringförmige Etiketten aus einer oder mehreren gegeneinander kaschierten Folien, die auf einen Umfang größer als der zu etikettierende Gegenstand gebracht werden, über diesen Gegenstand gestreift werden und danach durch elastische Rückverformung (stretch-Etiketten) oder durch thermisches Schrumpfen (Schrumpfetiketten) auf die Oberfläche des Gegenstandes aufgebracht werden.

Strahlenhärtende Schmelzklebstoffe sind beispielsweise aus der DE 4041753 A1 oder der WO 02/34858 bekannt. Darin werden zweistufig polymerisierbare Beschichtungsmassen auf Urethanbasis beschrieben, die durch einen Gehalt an UV-polymerisierbaren Acrylatgruppen im Rahmen einer ersten Härtungsstufe verfestigt werden, und in einer nachfolgenden zweiten Stufe über Isocyanatgruppen eine irreversible Vernetzung erfolgt. Zur Viskositätsabsenkung werden dem Klebstoff als Reaktivverdünner monofunktionelle Acrylate zugegeben. Isocyanathaltige Klebstoffe können jedoch gesundheitlich bedenklich sein.

In der JP 07088958 wird ein Verfahren beschrieben, in dem ein Polyolefinfilm ggf. bedruckt wird und mit Elektronenstrahl- härtenden Klebstoffen in Form eines Schlauches verklebt wird. Nähere Angaben zu dem Klebstoff werden nicht gemacht. Die Schlauchmaterialien werden aufgerollt. In der EP 1130070 A1 werden strahleninduziert härtende Klebstoffe beschrieben, die auf Basis von epoxidierten Blockcopolymeren aufgebaut sind. Diese können unter Strahlung vernetzen und werden zum Verkleben von Schrumpffolien eingesetzt.

UV-vernetzende Klebstoffe sind auch aus der WO 2005/105857 bekannt. Dort werden Umsetzungsprodukte beschrieben aus einem Polyesterdiol, einem Polyetherpolyol zusammen mit einem OH-funktionellen Acrylat, die mit Polyisocyanaten umgesetzt werden. Diese Prepolymere werden dann mit monomeren Acrylaten und Initiatoren gemischt und als reaktiver Klebstoff eingesetzt.

Das Dokument EP 1262 502 A offenbart einen strahlenvernetzenden Klebstoff, der wie folgt hergestellt wird (siehe Beispiel 1):
- Schritt 1: Umsetzung von 7 mol eines Polyesterpolyols mit 8 mol Isophoron-Diisocyanat zur Herstellung eines NCO-Prepolymers,
- Schritt 2: Umsetzung des NCO-Prepolymers aus Schritt 1 mit 1 mol Hydroxyethyl-Acrylat und 1 mol Isooctanol, bis keine NCO-Gruppen nachweisbar sind,
- Anschließend werden 3 Gewichtsanteile von Hydroxycyclohexyl-Phenyl-Keton mit 100 Gewichtsanteilen des Urethan-Prepolymers aus Schritt 2 zusammengemischt. Eine einfache Berechnung zeigt, dass 50 mol% vom Hydroxyethyl-Acrylate (analog zu der Verbindung (B)) und 50 mol% vom Isooctanol (analog zu der Verbindung (C)), bezogen auf die Menge der NCO-Gruppen des NCO-Prepolymers aus Schritt 1, eingesetzt wurden.

Eine andere einfache Berechnung zeigt, dass ca.14 mmol des Hydroxycyclohexyl-Phenyl-Ketons (radikalischer Photoinitiator) sowie ca. 3 mmol des NCO-freien Reaktionsproduktes aus Schritt 2 zusammengemischt wurden.

Die bekannten Klebstoffe haben aber den Nachteil, dass Vernetzung und Haftung nicht ausreichend schnell erhalten werden, außerdem ist die Haftung auf Kunststoffsubstraten bei erhöhter Temperatur und bei mechanischer Belastung häufig nicht ausreichend.

Es ist daher Aufgabe der vorliegenden Erfindung, ein Verfahren zum Verkleben von Folienetiketten mit strahlenvernetzbaren Schmelzklebstoffen zur Verfügung zu stellen sowie einen dafür geeigneten strahlenhärtbaren Klebstoff, wobei die Verklebung nach Vernetzung eine schnelle Belastung auch unter thermischer Beanspruchung ermöglicht und sich durch eine gute Haftung zu Kunststoffoberflächen auszeichnet. Insbesondere eignet sich der Klebstoff zur Verklebung von Schrumpfetiketten für rotationssymmetrische Gebinde.

Die Aufgabe wird gelöst durch die Bereitstellung eines durch Strahlung vernetzenden Schmelzklebstoffs gemäß den Patentansprüchen. Dabei wird ein Schmelz-klebstoff zur Verfügung gestellt, der ein Polyurethanpolymer enthält, das mindestens eine durch Strahlung vernetzbare Gruppe enthält, wobei das Polyurethanpolymer aus einem reaktiven Polyurethanprepolymer hergestellt wird mit mindestens zwei NCO-Gruppen, das an einem Teil der NCO-Gruppen mit niedermolekularen Verbindungen umgesetzt wird, die radikalisch vernetzbare Doppelbindungen enthalten, sowie eine mit NCO-Gruppen reaktive Gruppe, und ein Teil der NCO-Gruppen mit monofunktionellen Verbindungen umgesetzt werden, die keine weiteren radikalisch vernetzbaren Gruppen aufweisen. Zusätzlich enthält der Schmelzklebstoff mindestens einen radikalischen Photoinitiator, der entweder im Polymer gemischt und/oder anreagiert an einen Teil der NCO-Gruppen vorliegt.

Ein weiterer Gegenstand der Erfindung ist die Verwendung solcher Schmelzklebstoffe mit strahlenvemetzenden funktionellen Gruppen, die zum Verkleben von Folienetiketten auf Gebinden geeignet sind, insbesondere zum Verkleben von schrumpfbaren Etiketten. Ein weiterer Gegenstand der Erfindung ist die Verwendung solcher Schmelzklebstoffe zur Beschichtung von Bändern, Folien, Etiketten oder medizinisch einsetzbaren Gegenständen mit haftklebrigen Schichten.

Der erfindungsgemäße Schmelzklebstoff besteht im Wesentlichen aus einem PU-Polymer, das endständig strahlenvernetzbare reaktive Doppelbindungen aufweist. Weiterhin soll das PU-Polymer freie, nicht vernetzbare Polymerkettenenden aufweisen. Zusätzlich können an dem PU-Polymer chemisch gebundene Initiatoren vorliegen. Das PU-Polymer soll aus einem NCO-reaktiven Polyurethanprepolymer hergestellt werden.

Das Polyurethanprepolymer A) als Basis für die weiteren Umsetzungen wird durch Umsetzung von Diolen und/oder Triolen mit Di- oder Tri-Isocyanatverbindungen hergestellt. Dabei werden die Mengenverhältnisse so gewählt, dass endständig NCO-funktionalisierte Prepolymere erhalten werden. Insbesondere sollen die Prepolymere linear sein, d.h. überwiegend aus Diolen und Diisocyanaten hergestellt werden. Eine zusätzliche Verwendung von geringen Anteilen an trifunktionellen Polyolen oder Isocyanaten ist möglich. Die bei der Synthese der Prepolymeren einsetzbaren Polyole und Polyisocyanate sind dem Fachmann bekannt.

Es handelt sich dabei um die für Klebstoffanwendung bekannten monomeren Dioder Triisocyanate. Beispiele für geeignete monomere Polyisocyanate sind 1,5-Naphthylendiisocyanat, 2,2'-, 2,4- und/oder 4,4'-Diphenylmethandiisocyanat (MDI), hydriertes MDI (H12MDI), Allophanate des MDI, Xylylendiisocyanat (XDI), Tetramethylxylylendiisocyanat (TMXDI), 4,4'-Diphenyldimethylmethandiisocyanat, Di- und Tetraalkylendiphenylmethandiisocyanat, 4,4'-Dibenzyldiisocyanat, 1,3-Phenylendiisocyanat, 1,4-Phenylendiisocyanat, die Isomeren des Toluylendiisocyanats (TDI), 1-Methyl-2,4-diisocyanato-cyclohexan, 1,6-Diisocyanato-2,2,4-trimethylhexan, 1,6-Diisocyanato-2,4,4-trimethylhexan, 1-Isocyanatomethyl-3-isocyanato-1,5,5-trimethylcyclohexan (IPDI), chlorierte und bromierte Diisocyanate, phosphorhaltige Diisocyanate, 4,4'-Di-isocyanatophenylperfluorethan, Tetramethoxybutan-1,4-diisocyanat, Butan-1,4-diisocyanat, Hexan-1,6-diisocyanat (HDI), Dicyclohexylmethandiisocyanat, Cyclohexan-1,4-diisocyanat, Ethylendiisocyanat, Phthalsäure-bis-isocyanato-ethylester, Trimethylhexamethylendiisocyanat, 1,4-Diisocyanatobutan, 1,12-Diisocyanatododecan, Dimerfettsäurediisocyanat. Besonders geeignet sind aliphatische Isocyanate wie Hexamethylendiisocynat, Undecan-, Dodecamethylendiisocyanat, 2,2,4-Trimethylhexan-2,3,3-Trimethyl-hexamethylen, 1,3- oder 1,4-Cyclohexandiisocynat-, 1,3- oder 1,4-Tetramethylxyloldiisocynat, Isophorondiisocynat, 4,4-Dicyclohexylmethan-, Lysinesterdiisocyanat oder Tetramethylxylylendiisocyanat (TMXDI).

Als trifunktionelle Isocyanate geeignet sind Polyisocyanate, die durch Trimerisation oder Oligomerisation von Diisocyanaten oder durch Reaktion von Diisocyanaten mit polyfunktionellen hydroxyl- oder aminogruppenhaltigen Verbindungen entstehen. Zur Herstellung von Trimeren geeignete Isocyanate sind die bereits oben genannten Diisocyanate, wobei die Trimerisierungsprodukte von HDI, TMXDI oder IPDI besonders bevorzugt sind.

In einer besonderen Ausführungsform können auch Polyisocyanate mit Uretdion-, isocyanurat-, Allophanat-, Biuret-, Iminooxathizindion- und/oder Oxadiazintrionstruktur enthalten sein.

Der Anteil an aromatischen Isocyanaten soll bevorzugt weniger als 50 % der Isocyanate betragen. Besonders bevorzugt sind PU-Prepolymere auf Basis von aliphatischen oder cycloaliphatischen Polyisocyanaten oder von Oligomeren auf Basis von HDI, IPDI und/oder 2,4'- oder 4,4'-Diisocyanatodicyclohexylmethan.

Als di-funktionelle oder tri-funktionelle Polyole können die bekannten Polyole mit einer Molekulargewicht bis 50000 g/mol ausgewählt werden. Sie sollen beispielsweise auf Basis von Polyethern, Polyestern, Polyolefinen, Polyacrylaten oder Polyamiden ausgewählt werden, wobei diese Polymere zusätzlich OH-Gruppen aufweisen müssen. Bevorzugt sind Polyole, die endständige OH-Gruppen aufweisen.

Im Rahmen der vorliegenden Erfindung als Polyol zur Herstellung des PU-Prepolymeren geeignete Polyester können durch Polykondensation von Säure- und Alkoholkomponenten gewonnen werden, insbesondere durch Polykondensation einer Polycarbonsäure oder eines Gemischs aus zwei oder mehr Polycarbonsäuren und einem Polyol oder einem Gemisch aus zwei oder mehr Polyolen. Als Polycarbonsäure sind solche mit einem aliphatischen, cycloaliphatischen, aromatischen oder heterocyclischen Grundkörper geeignet. Gegebenenfalls können anstatt der freien Carbonsäuren auch deren Säureanhydride oder deren Ester mit C₁₋₅-Monoalkoholen zur Polykondensation eingesetzt werden.

Als Diole zur Umsetzung mit den Polycarbonsäuren können eine Vielzahl von Polyolen eingesetzt werden. Beispielsweise sind aliphatische Polyole mit 2 bis 4 primären oder sekundären OH-Gruppen pro Molekül und 2 bis 20 C-Atomen geeignet. Ebenfalls eingesetzt werden können anteilsweise höherfunktionelle Alkohole. Verfahren zur Herstellung solcher Polyesterpolyole sind dem Fachmann bekannt und diese Produkte sind kommerziell erhältlich.

Weiterhin können als Polyol Polyetherpolyole eingesetzt werden. Polyetherpolyole werden vorzugsweise durch Umsetzung von niedermolekularen Polyolen mit Alkylenoxiden erhalten. Die Alkylenoxide weisen vorzugsweise zwei bis vier C-Atome auf. Geeignet sind beispielsweise die Umsetzungsprodukte von Ethylenglykol, Propylenglykol oder den isomeren Butandiolen mit Ethylenoxid, Propylenoxid oder Butylenoxid. Es sind auch Umsetzungsprodukte polyfunktioneller Alkohole wie Glycerin, Trimethylolethan oder Trimethylolpropan, Pentaerythrit oder Zuckeralkohole mit den genannten Alkylenoxiden zu Polyetherpolyolen geeignet. Es kann sich um statistische Polymere oder um Blockcopolymere handeln. Besonders geeignet sind aus den genannten Umsetzungen erhältliche Polyetherpolyole mit einem Molekulargewicht von etwa 200 bis etwa 20.000 g/mol, vorzugsweise von etwa 400 bis etwa 6.000 g/mol.

Ebenfalls als Polyol geeignet sind Polyacetale, die endständig OH-Gruppen aufweisen. Weitere Polyole können auf Basis von Polycarbonaten oder Polycaprolactonen ausgewählt werden.

Weitere geeignete Polyole können auf Basis von Polyacrylaten hergestellt sein. Es handelt sich dabei um durch Polymerisation von Poly(meth)acrylestern hergestellte Polymere. Gegebenenfalls können auch andere copolymerisierbare Monomere zu geringen Anteilen enthalten sein. Die erfindungsgemäßen Acrylate sollen zwei OH-Gruppen aufweisen. Diese können bevorzugt endständig in dem Polymer vorhanden sein. Solche OH-funktionellen Poly(meth)acrlate sind dem Fachmann bekannt.

Eine weitere geeignete Klasse von Polyolen sind OH-funktionalisierte Polyolefine. Polyolefine sind dem Fachmann bekannt und können in vielen Molekularmassen erzeugt werden. Solche Polyolefine auf Basis von Ethylen-, Propylen- oder höherkettigen α-Olefinen als Homo- oder Copolymer können entweder durch Copolymerisation von funktionelle Gruppen enthaltenden Monomeren oder durch Pfropfreaktionen funktionalisiert werden. Eine weitere Möglichkeit besteht darin, dass diese Basispolymere nachträglich beispielsweise durch Oxidation mit OH-funktionellen Gruppen versehen werden.

Eine weitere Klasse von Polyolen enthält ein Polyamid-Rückgrat. Polyamide sind Umsetzungsprodukte von Diaminen mit Di- oder Polycarbonsäuren. Durch gezielte Synthese ist es möglich, endständig OH-Gruppen in Polyamide einzuführen.

Die erfindungsgemäß zur Herstellung der PU-Prepolymere geeigneten Polyole sollen eine Molmasse zwischen 200 bis 50000 g/mol aufweisen. Insbesondere soll das Molekulargewicht kleiner 30000 g/mol sein. Im Falle von Polyetherpolyolen soll das Molekulargewicht zwischen 200 bis 20000 g/mol liegen, insbesondere zwischen 400 und 6000 g/mol. Im Falle von Polyesterpolyolen soll das Molekulargewicht bevorzugt kleiner 10000 g/mol betragen, insbesondere zwischen 600 und 2500 g/mol (zahlenmittleres Molekulargewicht, M_{N}, wie durch GPC bestimmbar). Insbesondere geeignet sind lineare Polyetherpolyole, Polyesterpolyole oder Gemische davon.

Die Umsetzung der Polyole mit den Polyisocyanaten kann beispielsweise in Gegenwart von Lösemitteln erfolgen, bevorzugt wird jedoch in lösemittelfreier Form gearbeitet. Zur Beschleunigung der Reaktion wird üblicherweise die Temperatur erhöht, beispielsweise zwischen 40 bis 80°C. Gegebenenfalls können zur Beschleunigung der Reaktion in der Polyurethanchemie übliche Katalysatoren zum Reaktionsgemisch zugesetzt werden. Bevorzugt ist die Zugabe von Dibutylzinndilaurat, Dimethylzinndineodecanoat oder Diazabicyclooctan (DABCO). Dabei soll die Menge von etwa 0,001 Gew.-% bis etwa 0,1 Gew.-% des Prepolymeren betragen.

Bevorzugt werden Prepolymere aus den erwähnten Polyisocyanaten und Polyolen auf Basis von Polyether- und/oder Polyesterdiolen hergestellt. Insbesondere sollen Gemische beider Polyoltypen bei der Synthese eingesetzt werden, beispielsweise mit 95 bis 55 Gew.% Polyetherpolyolanteil. Eine weitere besondere Ausführungsform verwendet Polyetherpolyole, die mindestens 50 Gew.-% Anteil an Ethylenoxideinheiten enthalten. Die entstehenden reaktiven PU-Prepolymere A) sind NCOreaktiv und tragen 3 oder bevorzugt 2 Isocyanatgruppen. Bevorzugt handelt es sich um endständige NCO-Gruppen.

In einer weiteren Reaktion werden die NCO-Gruppen anteilsweise mit Verbindungen B) umgesetzt, die eine funktionelle Gruppe tragen, die mit Isocyanaten reagieren kann und als weitere funktionelle Gruppe eine durch radikalische Polymerisation vernetzbare Doppelbindung aufweist. Diese habe üblicherweise ein Molekulargewicht von weniger als 1500 g/mol.

Beispiele für solche Verbindungen sind Ester von α-β-ungesättigten Carbonsäuren mit niedermolekularen insbesondere aliphatischen Alkoholen, die im Alkylrest noch eine weitere OH-Gruppe tragen. Beispiele für solche Carbonsäuren sind Acrylsäuren, Methacrylsäure, Crotonsäuren, Itaconsäure, Fumarsäure- und Maleinsäure-halbester. Entsprechende OH-Gruppen tragende Ester von (Meth)acrylsäure sind beispielsweise 2-Hydroxyethyl(meth)acrylamid, 2-Hydroxyethyl(meth)-acrylat, 2-Hydroxypropyl(meth)acrylat, 3-Hydroxypropyl(meth)acrylat, 3-Hydroxypropyl(meth)acrylamid, N-Hydroxyethyl(meth)acrylamid, Umsetzungsprodukte von Glycidylethern oder -estern mit Acryl- oder Methacrylsäure, beispielsweise Umsetzungsprodukte von Versaticsäureglycidylestern mit Acryl- oder Methacrylsäure, Addukte von Ethylenoxid oder Propylenoxid an (Meth)acrylsäure, Umsetzungsprodukte von Hydroxylacrylaten mit ε-Caprolacton oder partielle Umesterungsprodukte von Poylalkoholen, wie Pentaerythrit, Glycerin oder Trimethylolpropan, mit (Meth)acrylsäure.

Die Menge der OH-funktionellen Verbindung mit radikalisch polymerisierbaren Doppelbindungen wird so gewählt, dass 22 bis 90 Mol-%, bevorzugt 25 bis 85 Mol-% bezogen auf die NCO-Gruppen des PU-Prepolymeren eingesetzt werden. Eine bevorzugte Ausführungsform verwendet ein Gemisch von Methacrylaten und Acrylaten, wobei der Anteil an Acrylaten mit mindestens 20 Mol-%, insbesondere mindestens 25 Mol-% der Mischung ausmacht.

Weiterhin wird das NCO-reaktive PU-Prepolymer mit mindestens einer Verbindung C) umgesetzt, die mindestens eine mit Isocyanaten reaktive Gruppe aufweist, darüber hinaus keine weitere unter radikalischen Bedingungen poylmerisierbare Gruppe besitzt. Beispiele für solche mit Isocyanate reaktive Gruppen sind OH-, SH- oder NHR-Gruppen. Diese Verbindungen C) sollen eine Molmasse zwischen 32 und 10000 g/mol aufweisen, insbesondere zwischen 40 und 4000 g/mol.

Geeignete monofunktionelle Verbindungen sind beispielsweise Alkohole mit 1 bis 36 C-Atomen, wie beispielsweise Methanol, Ethanol, Propanol und höhere Homologe, sowie die entsprechenden Thioverbindungen. Weiterhin können auch monohydroxy- oder monoamino-funktionelle Polymere eingesetzt werden mit einem Molekulargewicht kleiner 10000 g/mol, insbesondere von 200 und 2000 g/mol. Auch Gemische von niedermolekularen und polymeren Bausteinen sind möglich. Insbesondere soll die funktionelle Gruppe eine OH-Gruppe sein.

Auch höherfunktionelle Verbindungen sind geeignet. Beispiele dafür sind Diole, Triole oder Polyole, bevorzugt Diole oder Triole, insbesondere Diole. Geeignete Verbindungen sind beispielsweise Polyole mit 2 bis 44 C-Atomen, beispielsweise Ethylenglycol, Propandiol, Butandiol und höhere Homologe, sowie die entsprechenden Thioverbindungen. Die Mengen dieser Polyole werden so gewählt, dass ein geeigneter molarer Überschuss dieser reaktiven Funktionalität in Bezug auf die NCO-Gruppen vorliegt. Es kann eine Kettenverlängerung der NCO-Prepolymere erfolgen, bevorzugt soll jedoch nur eine OH-Gruppe umgesetzt werden, und man erhält freie OH-Gruppen. Dabei soll das Molekulargewicht dieser höherfunktionellen Verbindung C) bis 10000 g/mol betragen insbesondere von 200 bis zu 3000 g/mol. Es können auch SH oder NH-Polymere eingesetzt werden.

Die Menge der mit NCO-Gruppen reaktiven Verbindung wird so gewählt, dass 1 bis 50 Mol-% bezogen auf die NCO-Gruppen des PU-Prepolymeren umgesetzt werden. In einer Ausführungsform werden die Mengen so gewählt, dass die Summe der monofunktionellen Verbindung C) und der Verbindung mit den strahlungsreaktiven Gruppen B) zusammen der Menge Isocyanatgruppen entspricht. In einer weiteren bevorzugten Ausführungsform werden difunktionelle NCO-reaktive Verbindungen eingesetzt, wobei die Menge so gewählt wird, dass das OH:NCO-Verhältnis von 1,5 bis 2,5 :1 beträgt, bevorzugt von 1,6 bis 2,2 : 1. Insbesondere soll das molare Verältnis 2:1 betragen, bevorzugt als difunktionelle Hydroxyverbindung.

Die Umsetzungsverfahren zur Umsetzung der reaktiven PU-Prepolymere sind dem Fachmann bekannt. Dabei kann eine Reaktion im Gemisch stattfinden, oder die Bestandteile werden nacheinander umgesetzt. Nach der Umsetzung erhält man statistisch funktionalisierte PU-Polymere.

Das PU-Polymer soll ein Molekulargewicht kleiner 200.000 g/mol aufweisen, insbesondere zwischen 1000 und 100.000 g/mol, bevorzugt zwischen 2000 und 50.000 g/mol, insbesondere unter 20.000 g/mol. Das PU-Polymer soll im wesentlichen frei von Isocyanatgruppen sein, d.h. nach der Umsetzungsreaktion sollen nur noch Spuren von nicht umgesetzten NCO-Gruppen enthalten sein. Die Menge soll unter 0,1 % (bezogen auf das Prepolymer) betragen, besonders bevorzugt kleiner 0,05 %.

Als weiterer notwendiger Bestandteil des Schmelzklebstoffs wird ein Photoinitiator eingesetzt, der bei Bestrahlung mit Licht einer Wellenlänge von etwa 215 nm bis etwa 480 nm dazu in der Lage ist, eine radikalische Polymerisation olefinisch ungesättigter Doppelbindungen zu initiieren. Im Rahmen der vorliegenden Erfindung sind grundsätzlich alle handelsüblichen Photoinitiatoren geeignet, die mit dem erfindungsgemäßen Schmelzklebstoff kompatibel sind, d. h. wenigstens weitgehend homogene Gemische ergeben.

Beispielsweise sind dies alle Norrish-Type I fragmentierenden und Norrish -Typ II Substanzen. Beispiele hierfür sind Photoinitiatoren der Kayacure -Reihe (Hersteller Nippon Kayaku), Trigonal 14 (Hersteller: Akzo), Photoinitiatoren der Irgacure^{®}-, Darocure^{®}- Reihe (Hersteller: Ciba-Geigy), Speedcure^{®}-Reihe (Hersteller Lambson), Esacure-Reihe (Hersteller: Fratelli Lamberti) oder Fi-4 (Hersteller Eastman). Insbesondere geeignet sind darunter Irgacure^{®} 651, Irgacure^{®} 369, Irgacure^{®} 184, Irgacure^{®} 907, Irgacure^{®} 1850, Irgacure^{®} 1173 (Darocure^{®} 1173), Ingacure^{®} 1116, Speedcure^{®} EDB, , Irgacure^{®} 784 oder Irgacure^{®} 2959 oder Gemische aus zwei oder mehr Verbindungen der Gruppe. Weiterhin geeignet sind Benzophenon und seine Derivate, wie Speedcure^{®} MBP, Speedcure^{®} MBB, Speedcure^{®} BMS oder Speedcure^{®} BEM, Thioxanthon und seine Derivate , wie Speedcure^{®} ITX, Speedcure^{®} CTX, Speedcure^{®} DETX, 2,4,6-Trimethylbenzoldiphenylphosphinoxid, das auch im Gemisch mit einem oder mehreren der oben genannten Photoinitiatoren eingesetzt werden kann.

Die Menge der Photoinitiatoren soll bis zu 6 Gew.% bezogen auf den Klebstoff betragen, insbesondere zwischen 1 bis 4 Gew.%. In einer bevorzugten Ausführungsform sollen die Photoinitiatoren unter UV-A-Strahlung die Reaktion starten.

Zusätzlich kann der Schmelzklebstoff noch Anteile an Reaktivverdünnern enthalten. Als Reaktiwerdünner sind besonders solche Verbindungen geeignet, die eine oder mehrere reaktive durch Bestrahlung mit UV-Licht oder mit Elektronenstrahlen polymerisierbare funktionelle Gruppe aufweisen.

Insbesondere sind di- oder höherfunktionelle Acrylat- oder Methacrylatester geeignet. Solche Acrylat- oder Methacrylatester umfassen beispielsweise Ester der Acrylsäure oder Methacrylsäure mit aromatischen, aliphatischen oder cycloaliphatischen Polyolen oder Acrylatester von Polyetheralkoholen.

Ebenfalls geeignete Verbindungen sind beispielsweise die Acrylsäure- oder Methacrylsäureester der aromatischen, cycloaliphatischen, aliphatischen, linearen oder verzweigten C₄₋₂₀-Monoalkohole oder von entsprechenden Etheralkoholen. Beispiele für solche Verbindungen sind 2-Ethylhexylacrylat, Octyl-/Decylacrylat, Isobornylacrylat, 3-Methoxybutylacrylat, 2-Phenoxyethylacrylat, Benzylacrylat oder 2-Methoxypropylacrylat, Neopentylglykoldi(meth)acrylat, 1,6-Hexandioldi(meth)acrylat, Trimethylolpropantri(meth)acrylat, Pentaerythrittetra(meth)acrylat, sowie (Meth)-acrylatester des Sorbits und anderer Zuckeralkohole. Diese (Meth)acrylatester von aliphatischen oder cycloaliphatischen Diolen können ggf. mit einem aliphatischen Ester oder einem Alkylenoxid modifiziert werden. Die durch einen aliphatischen Ester modifizierten Acrylate umfassen beispielsweise Neopentylglykolhydroxypivalatdi-(meth)acrylat, Caprolacton-modifizierte Neopentylglykolhydroxypivalatdi(meth)-acrylate und dergleichen. Die Alkylenoxid-modifizierten Acrylatverbindungen umfassen beispielsweise Ethylenoxid-modifizierte Neopentylglykoldi(meth)acrylate, Propylenoxid-modifizierte Neopentylglykoldi (meth)acrylate, Ethylenoxid-modifizierte 1,6-Hexandioldi(meth)acrylate oder Propylenoxid-modifizierte 1,6-Hexandioldi(meth)-acrylate, Neopentylglykol-modifizierte (Meth)acrylate, Trimethylolpropandi(meth)-acrylate, Polyethylenglykoldi(meth)acrylate, Polypropylenglykoldi(meth)acrylate und dergleichen. Tri- und höherfunktionelle Acrylatmonomere umfassen beispielsweise Trimethylolpropantri(meth)acrylat, Pentaerythritoltri- und tetra(meth)acrylat, Dipentaerythritoltetra(meth)acrylat, Dipentaerytrhitolpenta(meth)acrylat, Dipentaerythritolhexa(meth)acrylat, Caprolacton-modifiziertes Dipentaerythritolhexa(meth)acrylat, Pentaerythritoltetra(meth)acrylat, Tris[(meth)acryloxyethyl] isocyanurat, Caprolacton-modifizierte Tris[(meth)acryloxyethyl]isocyanurate oder Trimethylolpropantetra(meth)-acrylat oder Gemische aus zwei oder mehr davon.

Zu den im Rahmen der vorliegenden Erfindung in dem Schmelzklebstoff zusätzlich einsetzbaren Hilfs- und Zusatzstoffen zählen beispielsweise Weichmacher, Stabilisatoren, Antioxidantien, Haftvermittler, Harze, Polymere, Farbstoffe oder Füllstoffe.

In einer Ausführungsform enthält der erfindungsgemäße Schmelzklebstoff mindestens ein klebrigmachendes Harz. Das Harz bewirkt eine zusätzliche Klebrigkeit. Es können grundsätzlich alle Harze eingesetzt werden, die mit dem Schmelzklebstoff verträglich sind, d.h. ein weitgehend homogenes Gemisch bilden.

Es handelt sich dabei insbesondere um Harze, die einen Erweichungspunkt von 70 bis 140 °C (Ring-Ball-Methode, DIN 52011) besitzen. Es sind dieses beispielsweise aromatische, aliphatische oder cycloaliphatische Kohlenwasserstoff-Harze, sowie modifizierte oder hydrierte Versionen davon. Beispiele dafür sind aliphatische oder alicyclische Petroleum-Kohlenwasserstoffharze und deren hydrierte Derivate. Weitere, im Rahmen der Erfindung einsetzbare Harze sind z.B. Hydroabietylalkohol und seine Ester, insbesondere Ester mit aromatischen Carbonsäuren wie Terephthalsäure und Phthalsäure; modifizierte Naturharze wie Harzsäuren aus Balsamharz, Tallharz oder Wurzelharz, z.B. teil- oder vollverseiftes Balsamharz; Alkylester von gegebenenfalls teilhydriertem Kolophonium mit niedrigen Erweichungspunkten wie z.B. Methyl-, Diethylenglykol-, Glycerin- und Pentaerythrit-Ester; Terpen-Harze, insbesondere Terpolymere oder Copolymere des Terpens, wie Styrol-Terpene, α-Methyl-Styrol-Terpene, Phenol-modifizierte Terpenharze sowie hydrierte Derivate davon; Acrylsäure-Copolymerisate, vorzugsweise Styrol-Acrylsäure-Copolymere und Harze auf Basis funktioneller Kohlenwasserstoffharze.

In einer weiteren Ausführungsform handelt es sich bei den Harzen um bei Raumtemperatur flüssige Typen. Bevorzugt soll die Viskosität unter 1000000 mPas liegen insbesondere zwischen 1000 bis zu 200000 mPas. Auch Mischungen von festen uns flüssigen Harzen sind möglich.

Die Harze besitzen im Allgemeinen ein niedriges Molekulargewicht unter 1500 g/mol, insbesondere unter 1000 g/mol. Sie können chemisch inert sein, oder sie tragen noch funktionelle Gruppen, wie Doppelbindungen oder OH-Gruppen. In einer Ausführungsform reagieren die funktionellen Gruppen nicht mit dem erfindungsgemäßen PU-Prepolymeren, in einer anderen Ausführungsform können Doppelbindungen des Harzes mit dem PU-Polymer reagieren. Das Harz kann in einer Menge von 0 bis 70 Gew.-% eingesetzt werden, bevorzugt von 10 bis 40 Gew.-% bezogen auf den Schmelzklebstoff.

Als Weichmacher werden beispielsweise medizinische Weißöle, naphtenische Mineralöle, paraffinischen Kohlenwasserstofföle, Phthalate, Adipate, Polypropylen-, Polybuten-, Polyisopren-Oligomere, hydrierte Polyisopren- und/oder Polybutadien-Oligomere, Benzoatester, pflanzliche oder tierische Öle und deren Derivate eingesetzt. Als einsetzbaren Stabilisatoren oder Antioxidantien können Phenole, sterisch gehinderte Phenole hohen Molekulargewichts, polyfunktionelle Phenole, schwefelund phosphorhaltige Phenole oder Amine ausgewählt werden. Als Pigmente können beispielsweise Titandioxid, Talkum, Ton und dergleichen ausgewählt werden.

Gegebenenfalls können dem Schmelzklebstoff Wachse zugegeben werden. Die Menge ist dabei so bemessen, dass die Adhäsion nicht negativ beeinflusst wird. Das Wachs kann natürlichen oder synthetischen Ursprungs sein.

Ferner können zusätzlich Photosensibilisatoren eingesetzt werden. Durch den Einsatz von Photosensibilisatoren ist es möglich, die Absorption von Photopolymerisationsinitiatoren zu kürzeren und/oder zu längeren Wellenlängen auszuweiten und auf diese Weise die Vernetzung zu beschleunigen. Die von ihnen absorbierte Strahlung bestimmter Wellenlänge wird als Energie auf den Photopolymerisationsinitiator übertragen. Im Rahmen der Erfindung einsetzbare Photosensibilisatoren sind z.B. Acetophenon, Thioxanthane, Benzophenon und Fluoreszein und deren Derivate.

Gegebenenfalls können in den erfindungsgemäßen Klebstoffen Anteile an thermoplastischen Polymeren vorliegen, beispielsweise kann es sich um Polymere mit einem Molekulargewicht größer 1000 g/mol handeln. Diese enthalten keine reaktiven Gruppen, in einer anderen Ausführungsform können diese Polymere vinylisch ungesättigte Gruppen aufweisen. Es sind beispielsweise Polymere aus der Gruppe der Polyacrylate, Polymethacrylate und deren Copolymere, Ethylen-n-butylacrylat-Copolymere, Ethylen-(Meth)Acrylsäure-Copolymere, Ethylen-VinylacetatCopolymere, Polyvinyl-methylether, Polyvinylpyrrolidon, Polyethyloxazoline, Polyamide, Stärke oder Celluloseester, amorphe Polyolefine, beispielsweise Polypropylen-Homopolymere, Propylen-Buten-Copolymere, Propylen-Hexen-Copolymere und insbesondere amorphe Poly-alpha-Olefin-Copolymere (APAOs), die durch Metallocen-Katalyse hergestellt werden, enthalten.

Diese weiteren polymeren Bestandteile können von 0 bis 30 Gew.-%, insbesondere 2 bis 20 Gew.-% im erfindungsgemäßen Schmelzklebstoff enthalten. Das Molekulargewicht beträgt im Allgemeinen über 1000, bevorzugt über 10000 g/mol. Die Auswahl und die Eigenschaften der thermoplastischen Polymere sind dem Fachmann bekannt.

Die oben genannten Schmelzklebstoffe sind lösemittelfrei und können auf bekannte Art hergestellt werden. Sie sind zu der erfindungsgemäßen Verwendung geeignet.

In einer besonderen Ausführungsform weist ein erfindungsgemäßer Schmelzklebstoff einen Photoinitiator (D) auf, der mindestens eine mit NCO-Gruppen reaktive OH-Gruppe besitzt, beispielsweise eine primäre oder sekundäre OH-Gruppe. Dabei ist es vorteilhaft, wenn diese OH-Gruppe mit einem Teil der NCO-Gruppen des PU-Prepolymeren reagiert hat und gebunden am Polymeren vorliegt. Die Menge der reaktiven Initiatoren soll mindestens 1 Mol% bezogen auf die NCO-Gruppen des PU-Prepolymeren betragen, insbesondere zwischen 4 bis 50 Mol-%, bevorzugt zwischen10 bis 30 Mol-%. Der ausgewählte Initiator wird im Rahmen der PU-Polymersynthese zugesetzt, wobei dann die Summe der Komponenten B, C, D 100 Mol% ergeben soll.

Gegebenenfalls ist es möglich, dass zusätzlich zum anreagierten Initiator noch bis zu 5 Gew.-% weitere nicht gebundene Initiatoren in dem Schmelzklebstoff enthalten sind, insbesondere zwischen 1 bis 4 Gew.-%. Dabei kann es sich um einen Überschuss des ersten Initiators handeln, es können aber auch andere Initiatoren enthalten sein. Diese können auch ein anderes Absorptionsverhalten gegen UV-Strahlung aufweisen.

Die erfindungsgemäßen Schmelzklebstoffe sind insbesondere zum Verkleben von Etiketten mit Substraten aus Glas, Metall oder Kunststoff geeignet. Solche Etiketten können aus lackiertem oder unlackiertem Papier bestehen, vor allem aber aus Kunststoffen. Es kann sich um Schildetiketten oder um Rund-um-Etiketten handeln. Die erfindungsgemäßen Schmelzklebstoffe zeichnen sich insbesondere durch eine sehr gute Adhäsion zu den vorgenannten Substraten aus.

Eine bevorzugte Anwendungsform der erfindungsgemäß geeigneten Schmelzklebstoffe ist die Verklebung von Hohlkörpern mit Etiketten, insbesondere mit thermisch schrumpfbaren Etiketten. Hohlkörper sind z.B. Flaschen, Dosen, Hobbocks oder Kartuschen. Es kann sich um rotationssymmetrische Gegenstände handeln, aber auch eckige Hohlkörper sind möglich. Sie bestehen beispielsweise aus Metall, Glas oder thermoplastischen Kunststoffen. Bevorzugt können polare Kunststoffgebinde verklebt werden, insbesondere aus Polyester. Solche Hohlkörper sind beispielsweise für Mineralwasser und Erfrischungsgetränke im Gebrauch. Die Etiketten bestehen im allgemeinen aus thermoplastischen Kunststoffen wie Polyethylen, Polypropylen, Polystyrol, Polyvinylchlorid oder Zellglas. Bevorzugt ist es, Etiketten aus einer Folie auf der Basis von unpolaren Kunststoffen, insbesondere von orientiertem Polypropylen (OPP) einzusetzen. An die Form der Etiketten werden keine besonderen Anforderungen gestellt. Es handelt sich bevorzugt um Rundumetiketten. Beispielsweise können Etiketten für Aerosoldosen oder Konturflaschen mit anschließendem Aufschrumpfen verklebt werden.

Bei der Verwendung der erfindungsgemäß geeigneten Schmelzklebstoffe werden diese in geschmolzenem Zustand auf das Etikett aufgetragen, im folgenden Verfahrensschritt verklebt und danach durch Strahlung vernetzt. Für eine problemlose Verarbeitung sollte die erfindungsgemäßen Schmelzklebstoffe vor der Bestrahlung eine entsprechend niedrige Viskosität aufweisen, bei 130 °C soll sie üblicherweise 200 mPas bis 10000 mPas betragen, insbesondere von 500 mPas bis 3000 mPas (gemessen mit einem Brookfield Viskosimeter DV 2+, Spindel 27, bei angegebener Temperatur).

Die erfindungsgemäßen Schmelzklebstoffe weisen die erforderliche niedrige Viskosität bei niedrigen Verarbeitungstemperaturen auf, wie sie beispielsweise bei der Verwendung auf temperaturempfindlichen Etiketten, z. B. Kunststoffetiketten aus OPP gewünscht ist. Die Verarbeitungstemperaturen liegen im Bereich von 50 °C bis 150 °C, bevorzugt im Bereich von 70 °C bis 130 °C. Die Verarbeitung erfolgt auf an sich bekannten Maschinen.

Nach der Applikation des erfindungsgemäßen Schmelzklebstoffes und dem Zusammenfügen der zu verklebenden Teile, beispielsweise der verklebte Etiketten oder des Etiketts auf dem Hohlkörper, wird der erfindungsgemäße Schmelzklebstoff mit einer ausreichenden UV- oder Elektronenstrahl-Dosis bestrahlt, damit der Schmelzklebstoff eine ausreichende Haftung hat und die Substrate verbindet. Dabei soll die Dauer der Bestrahlung unterhalb von 5 sec liegen. Bevorzugt werden bei der Bestrahlung mit UV-Strahlen transparente Etiketten verwendet oder solche, die an der Klebezone mindestens UV-durchlässig sind.

Danach werden im Fall von schrumpfbaren Etiketten diese bei Temperaturen von mindestens 120 °C, meist über 150 °C innerhalb weniger Sekunden an die Kontur z.B. einer Aerosol-Dose aufgeschrumpft. Insbesondere im Bereich der Überlappungsverklebung weist der erfindungsgemäße Schmelzklebstoff nach Bestrahlung mit UV- oder Elektronenstrahlen eine sehr niedrige Kriechneigung bei gleichzeitig guter Klebefestigkeit der Überlappungsverklebung auf. Außerdem ist die Wärmestandfestigkeit des erfindungsgemäßen Schmelzklebstoffs verbessert, bei erhöhten Temperatur ist keine Verschiebungen der überlappend verklebten Etiketten zu beobachten, auch nicht durch die Formänderung durch das Aufschrumpfen. Probleme, wie beispielsweise die Verschmutzung der durch einen nicht beabsichtigten Verschiebevorgang freigelegten Klebstoffschicht, werden somit verhindert. Solche schrumpfbaren hülsenförmigen Etiketten können auch als Sicherung für Schraubverschlüsse von Flaschen eingesetzt werden.

Eine weitere Verwendungsform der erfindungsgemäß geeigneten Schmelzklebstoffe ist die Beschichtung von selbstklebenden Folien, Bändern oder Etiketten mit einer Klebstoffschicht. Dabei werden Bänder oder Folien, beispielsweise auf Basis von Polyolefinen oder Polyestern, mit dem erfindungsgemäß geeigneten Schmelzklebstoff beschichtet und dieser durch Strahlung vernetzt. Es wird in diesem Fall durch Auswahl eines entsprechenden Klebstoffs eine dauerhaft haftklebrige Schicht erhalten. Danach können diese Materialien konfektioniert werden. Auf diese Weise können dann dauerklebrige Folien, Etiketten und Bänder hergestellt werden. Die so erhaltenen selbstklebenden Oberflächen können ggf. durch antiadhäsiv beschichtete Trägerfolien abgedeckt werden. Die beschichteten Etiketten oder Folien zeigen eine hohe Wärmestandfestigkeit nach ihrer Verklebung auf ein Substrat. Beispielsweise können solche Substrate anschließend mit erwärmten Füllgütern befüllt werden, ohne dass sich die verklebte Folie oder das Etikett löst. Im Fall der Beschichtung von solchen selbstklebenden flächigen Substraten kann die Viskosität beim Auftragen der nicht vernetzten Klebstoffe von 500 bis 200000 mPas bei Verarbeitungstemperatur betragen, bevorzugt von 5000 bis 50000 mPas, insbesondere bis zu 10000 mPas. Die geeignete Viskistät ist von dem Auftragenverfahren abhängig und kann von dem Fachmann entsprechend ausgewählt werden. Dabei kann die Verarbeitungstemperatur beispielsweise bis zu 130°C betragen.

Eine weitere Verwendungsform ist bei der Herstellung von medizinischen Materialien. Beispielsweise können die Klebeflächen von Pflastern oder andere selbstklebenden Substraten mit einem erfindungsgemäßen Klebstoff beschichtet werden. Für diesen Anwendungszweck ist es bevorzugt Schmelzklebstoffe einzusetzen, die eine hohe Durchlässigkeit für Wasserdampf aufweisen. Beispielsweise können durch die Auswahl der Komponenten Werte von über 500 g/m² d erhalten werden, insbesondere über 1000 g/m² d. Insbesondere sind dafür erfindungsgemäße Schmelzklebstoff geeignet, die als Polyolkomponente im PU-Prepolymer A) Polyetherpolyole mit einem hohen Anteil an Ethylenoxid enthalten. Die Viskosität der Klebstoffe entspricht den Klebstoffen für die Beschichtung von Bändern oder Folien. Es werden nach UV-Vernetzung dauerhaftklebrige Schichten erhalten.

Die erfindungsgemäßen lösemittelfreien Schmelzklebstoffe weisen nach der Vernetzung eine verbesserte Klebkraft auf. Das entstandene Netzwerk ist gleichmäßig aufgebaut und verbesserte Adhäsion und Kohäsion dabei über einen weiten Temperaturbereich gegeben. Weiterhin ist es vorteilhaft, dass durch die chemisch anreagierten Initiatoren diese nicht in das Substrat migrieren können.

Der Gegenstand der Erfindung soll anhand der folgenden Beispiele näher erläutert werden.

### Beispiel 1:

App: 1I-Vierhalskolben mit Rührer; Thermofühler; N2-Überleitung; höhenverstellbares Ölbad;

### Vakuumpumpe mit stickstoffgefüllter Kühlfalle

### Ansatz:

| | | |
|---|---|---|
| 1.) PPG 1000 | 300,00 g | (Polypropylenglykol 1000; OHZ=112) |
| 2.) IPDI | 78,46 g | (Isophorondiisocyanat) |
| 3.) DBTL | 0,01 g | (Dibutylzinndilaurat, ) |
| 4.) HEA | 3,24 g | (2-Hydroxyethylacrylat) |
| 5.) Irgacure 2959 | 12,53 g | (Photoinitiator ) |
| 6.) Polyglykol 01/40 | 30,72 g | (Butylsubstituierter PPG-monoalkohol ) |
| 7.) Irganox 1726 | 0,76 g | (Antioxidanz) |

### Versuchsdurchführung:

1.) wurde vorgelegt und auf ca. 120°C aufgeheizt. Anschließend wurde Vakuum angelegt und bei < 10 mbar 1 h entwässert und anschließend mit Stickstoff belüftet. Die Temperatur wurde auf 30°C gesenkt, 3.) zugegeben und 10 min homogenisiert. Anschließend wurde 2.) zugegeben. Die Temperatur wurde in Schritten auf 80°C erhöht. Bei dieser Temperatur wurde weitergerührt, bis der NCO-Wert bei 1,24% lag. Der Ansatz wurde belüftet, 0,38g 7.) wurde zugegeben und homogenisiert. Dann wurde 4.) zugegeben und bei 80 °C weitergerührt bis ein NCO-Wert von 0,65% gemessen wurde. 5.) wurde zugegeben und weitergerührt bis der NCO-Wert bei 0,12 % lag. 0,38 g 7.) wurde untergerührt. 6.) wurde zugegeben und weitergerührt, bis der NCO-Wert kleiner 0,02 % lag. Der Ansatz im Vakuum entgast und abgefüllt. Schmelzviskosität 1500 mPas bei 120 °C; nach 48 stündiger Lagerung bei 120 °C betrug die Viskosität 1400 mPas.
   Peel-Test (ASTM D 1876): 2,3 N

### Testverfahren:

Auf eine transparente OPP- Folie (Exxon mobil 50 LR 210) wird an einem Ende ein erfindungsgemäßer Klebstoff bei ca. 120 - 130 °C streifenförmig aufgetragen. Dieses Ende wird auf eine gereinigte Aluminiumdose geklebt. Anschließend wird der Klebstoff entsprechend auf der anderen Seite der Folie streifenförmig aufgetragen und die Überlappung (ca. 1 cm) verklebt. Anschließend wird die etikettierte Dose an der Klebnaht mit einer UV-Anlage Typ Fusion F-600 mit einem H-Strahler (240 Watt/cm) bei einer Bandgeschwindigkeit von 25 m/min. bestrahlt. Der Abstand zum Substrat beträgt 10 cm. Es wird danach die Überlappung der Naht markiert und anschließend in einem Umluftschrank bei 120 °C geschrumpft. Nach konstanten Zeitintervallen (5 Min.) wird beurteilt, ob der Klebstoff die auftretenden Kräfte des Schrumpfungsprozesses aushält. Das ist durch ein Verrutschen der Überlappungsmarkierung festzustellen.

Die entsprechenden Prüflinge sind, falls sie nicht sofort getestet werden, im Dunkeln zu lagern.

Die aufgetragenen und getesteten Klebstoffe nach Beispiel 1 bis 5 zeigen alle eine gute Beständigkeit, die Überlappung verrutscht nicht nach einer Belastung von 30 min. im Umluftschrank.
Tack +, Haftung +, Creep ++

### Beispiel 2:

App.: wie in Beispiel 1

| | | |
|---|---|---|
| 1.) PPG 1000 | 300,00 g | |
| 2.) IPDI | 78,46 g | |
| 3.) Tinstab BL 277 | 0,01 g | (Sn-Katalysator) |
| 4.) HEA | 4,59 g | |
| 5.) Irgacure 2959 | 11,82 g | |
| 6.) Polyglykol B01/40 | 14,49 g | |
| 7.) Irganox 1726 | 0,76 g | |

### Versuchsdurchführung: .

1.) wurde vorgelegt und auf ca. 120°C aufgeheizt. Anschließend wurde Vakuum angelegt und bei < 10 mbar 1 h entwässert und anschließend mit Stickstoff belüftet. Die Temperatur wurde auf 30°C gesenkt, 3.) zugegeben und 10 min homogenisiert. Anschließend wurde zugegeben. Die Temperatur wurde in Schritten auf 80°C erhöht. Nachdem der NCO-Wert 1,17% erreicht hatte, wurde belüftet, 0,38g 7.) wurde zugegeben und homogenisiert. Dann wurde 4.) zugegeben und weitergerührt bis ein NCO-Wert von 0,72% gemessen wurde. 5.) wurde zugegeben und weitergerührt, bis der NCO-Wert bei 0,12% lag. 6.) wurde untergerührt und weitergerührt bis der NCO-Wert unter 0,05 % lag. Anschließend wurde der Ansatz im Vakuum entgast und abgefüllt. Schmelzviskosität 3100 mPas bei 120 °C. Nach 48 Stunden Lagerung bei 120 °C betrug die Viskosität 3400 mPas.
   Peel-Test: 1,7 N
   Ergebnis nach dem oben beschriebenen Testverfahren:
   Tack +, Haftung +, Creep +

### Beispiel 3:

App.: wie in Beispiel 1

### Ansatz:

| | | |
|---|---|---|
| 1.) PPG 1000 | 50,00 g | |
| 2.) PE 218 | 200,00 g | (aliphatischer Polyesterdiol, |
| | | OHZ 131, Molgewicht ca. 850) |
| 3.) IPDI | 94,54 g | |
| 4.) Tinstab BL 277 | 0,01 g | |
| 5.) HEA | 14,76 g | |
| 6.) Irgacure 2959 | 28,51 g | |
| 7.) Irganox 1726 | 0,75 g | |

### Versuchsdurchführung:

1.) + 2.) wurden vorgelegt und auf ca. 120°C aufgeheizt. Anschließend wurde Vakuum angelegt und bei 13 mbar 1 h entwässert und anschließend mit Stickstoff belüftet. Die Temperatur wurde auf 63°C gesenkt, 0,005 g 4.) zugegeben und 5 min homogenisiert. Anschließend wurde 3.) zugegeben. Die Temperatur stieg von 56°C auf 74°C an. Nach Abklingen der Exothermie wurde mit dem Ölbad auf 90°C aufgeheizt und gerührt bis der NCO-Wert bei 3,10% lag. Danach wurde der Ansatz mit trockener Luft belüftet, 0,35 g 7.) zugegeben und homogenisiert. Dann wurde 5.) zugegeben und weitergerührt. Nach 1 h wurde ein NCO-Wert von 1,59% gemessen. 6.) wurde zugegeben und weiter gerührt, bis der NCO-Wert bei 0,17% lag. Es wurde mit 0,005 g 4.) nach katalysiert und weitergerührt bis der NCO-Wert kleiner 0,1 % betrug. 0,39 g 7.) wurde untergerührt. Anschließend wurde der Ansatz 0,5 h im Vakuum entgast und abgefüllt. Schmelzviskosität 1000 mPas bei 125°C.

Ergebnis nach dem oben beschriebenen Testverfahren:
Tack +, Haftung +, Creep +

### Beispiel 4:

App.: wie in Beispiel 1

### Ansatz:

| | | |
|---|---|---|
| 1.) Poly- G 55-112 | 240,00 g | (Ethylenoxid/Propylenoxid-Diot; |
| | | OHZ = 112, Molgewicht 1000) |
| 2.) PE 218 | 60,4 g | |
| 3.) IPDI | 83,3 g | |
| 4.) DBTL | 0,01 g | |
| 5.) Irganox 1726 | 0,78 g | |
| 6.) HEA | 3,4 g | |
| 7.) Irgacure 2959 | 13,1 g | |
| 8.) Polyglykol B01/40 | 32,2g | |

### Versuchsdurchführung:

1.) + 2.) wurden vorgelegt und auf ca. 120°C aufgeheizt, es wurde Vakuum angelegt und bei 16 mbar 1 h entwässert und anschließend mit Stickstoff belüftet. Es wurden 4.) zugegeben und 10 min homogenisiert, anschließend wurde 3.) zugegeben. Die Temperatur wurde langsam in 10°C - Schritten auf 80°C erhöht und weitergerührt, bis der NCO-Wert 1,28% betrug. Die Temperatur wurde auf 90°C erhöht, 0,38 g 8.) zugegeben und homogenisiert. 5.) + 6.) + 7.) wurden zugegeben und solange weitergerührt, bis der NCO-Wert unter 0,05 % lag. 0,40 g 8.) wurden hinzugefügt und homogenisiert. Anschließend wurde der Ansatz im Vakuum entgast und abgefüllt. Schmelzviskosität 2900 mPas bei 120 °C; nach 4 Tagen Temperaturlagerung bei 120 °C betrug die Schmelzviskosität 2300 mPas.

Ergebnis nach dem beschriebenen Testverfahren: Tack +, Haftung +, Creep +. Die Wasserdampfdurchlässigkeit eines 50 µm Films bei 40 °C beträgt 2200 g/m²d. (analog DIN 53122)

## Patentansprüche

1. Durch Strahlung vernetzbare Schmelzklebstoffe, enthaltend mehr als 30 % bezogen auf den Schmelzklebstoff mindestens eines Polyurethanpolymeren, das mindestens eine durch Strahlung polymerisierbare reaktive Gruppe enthält, hergestellt durch Umsetzung
A) eines reaktiven PU-Prepolymeren mit zwei oder drei NCO-Gruppen pro Molekül hergestellt aus
i) mindestens einem di- oder trifunktionellen Polyol ausgewählt aus Polyethern, Polyestern, Polyolefinen, Polyacrylaten oder Polyamiden mit einer Molmasse zwischen 200 bis 50000 g/mol, umgesetzt mit
ii) einem Überschuss mindestens eines di- oder tri-Isocyanats mit einer Molmasse unterhalb von 1000 g/mol,
B) 22 bis 90 Mol-% mindestens einer niedermolekularen Verbindung (B) enthaltend eine radikalisch polymerisierbaren Doppelbindung und eine mit einer NCO-Gruppe reagierenden Gruppe, und
C) 1 bis 50 Mol-% mindestens einer Verbindung (C), die mindestens eine gegen NCO-Gruppen reaktive Gruppe aufweist, aber keine unter radikalischen Bedingungen polymerisierbare Gruppe, mit einer Molmasse von 32 bis 5000 g/mol und
D) 5 bis 50 Mol-% mindestens eines radikalischen Photoinitiators (D), der eine primäre oder sekundäre OH-Gruppe aufweist,
wobei die Angeben auf die NCO-Gruppen des PU-Prepolymeren bezogen sind
und die Summe aus B, C, D 100 Mol% ergeben soll,
sowie ggf. weitere Hilfsstoffe.

2. Schmelzklebstoff nach Anspruch 1, **dadurch gekennzeichnet, dass** der Schmelzklebstoff im Wesentlichen frei von Isocyanatgruppen ist.

3. Schmelzklebstoff nach einem der Ansprüche 1 bis 2, **dadurch gekennzeichnet, dass** als Polyole (A i) Polyether- und/oder Polyesterdiole mit einer Molmasse von 200 bis 20000 g/mol eingesetzt werden.

4. Schmelzklebstoff nach einem der Ansprüche 1 bis 3, **dadurch gekennzeichnet, dass** als Isocyanatverbindung (A ii) aliphatische Isocyanate eingesetzt werden.

5. Schmelzklebstoff nach einem der Ansprüche 1 bis 4, **dadurch gekennzeichnet, dass** als niedermolekulare Verbindung B) OH-funktionelle Ester der (Meth)Acrylsäure eingesetzt werden.

6. Schmelzklebstoff nach einem der Ansprüche 1 bis 5, **dadurch gekennzeichnet, dass** als Verbindung (C) 2 bis 35 Mol% mono- oder difunktionelle Alkohole eingesetzt werden.

7. Schmelzklebstoff nach einem der Ansprüche 1 bis 6, **dadurch gekennzeichnet, dass** 5 bis 25 Mol% radikalische Photoinitiatoren (D) eingesetzt werden, die eine primäre OH-Gruppe aufweisen.

8. Schmelzklebstoff nach einem der Ansprüche 1 bis 7, **dadurch gekennzeichnet, dass** zusätzlich bis zu 5 Gew.-% an nicht gebundenen Initiatoren enthalten sind.

9. Schmelzklebstoff nach einem der Ansprüche 1 bis 8, **dadurch gekennzeichnet, dass** zusätzlich Polymere auf Basis von Polyestern, Polyethern, Polyamiden oder Polyolefinen mit vinylischen Gruppen enthalten sind und/oder als Hilfsstoffe Harze, Stabilisatoren, Weichmacher sowie weitere Photoinitiatoren enthalten sind.

10. Schmelzklebstoff nach einem der Ansprüche 1 bis 9, **dadurch gekennzeichnet, dass** der Schmelzklebstoff eine Wasserdampfdurchlässigkeit von mehr als 500 g/m²d aufweist, insbesondere mehr als 1000 g/m²d.

11. Schmelzklebstoff nach Anspruch 10, **dadurch gekennzeichnet, dass** als Polyol Polyetherpolyole, insbesondere mit einem Ethylenoxidgehalt größer 25 Gew.-%, eingesetzt werden.

12. Schmelzklebstoff nach einem der Ansprüche 1 bis 11, **dadurch gekennzeichnet, dass** die Viskosität bei Applikationstemperatur im Bereich von 200 bis 200000 mPas liegt, insbesondere von 200 bis 3000 mPas oder von 5000 bis 10000 mPas, insbesondere bei 130°C.

13. Verwendung von durch Strahlung vernetzbaren Schmelzklebstoffen auf Basis von Polyurethanenprepolymeren nach einem der Ansprüche 1 bis 12 zum Verkleben von Folienetiketten auf Metall, Glas- und/oder Kunststoffgebinden und zum Beschichten von flächigen Gegenständen mit Haftklebeschichten.

14. Verwendung nach Anspruch 13 zum Verkleben von Einschicht- oder Mehrschichtetiketten oder von schrumpfbaren Etiketten auf Flaschen oder Dosen.

15. Verwendung nach Anspruch 13 zum Beschichten von Etiketten, Bändern oder medizinischen flächigen Gegenständen, wie Pflastern und Bandagen, mit einer Haftklebeschicht.

## Claims

1. Radiation cross-linkable melt adhesives, containing more than 30%, based on the melt adhesive, of at least one polyurethane polymer, which contains at least one reactive radiation polymerizable group, prepared by reaction of
A) a reactive PU prepolymer with two or three NCO groups per molecule, made from
i) at least one di- or tri-functional polyol selected from polyethers, polyesters, polyolefins, polyacrylates or polyamides with a molar mass between 200 and 50,000 g/mol, reacted with
ii) an excess of at least one di-or tri-isocyanate with a molar mass below 1,000 g/mol,
B) 22 to 90% by moles of at least one low molecular compound (B), containing a radical polymerizable double bond and a group reacting with an NCO group, and
C) 1 to 50% by moles of at least one compound (C), which has at least one reactive group against NCO groups, but no polymerizable group under radical conditions, with a molar mass from 32 to 5,000 g/mol and
D) 5 to 50% by moles of at least one radical photo-initiator (D), which has a primary or secondary OH group,
wherein the indications refer to the NCO groups of the PU prepolymer. and the sum of B, C, D should give 100% by moles,
as well as optionally further auxiliaries.

2. The melt adhesive according to claim 1, **characterized in that** the melt adhesive is essentially free of isocyanate groups.

3. The melt adhesive according to one of claims 1 to 2, **characterized in that** polyether diols and/or polyester diols with a molar mass from 200 to 20,000 g/mol are used as polyols (A i).

4. The melt adhesive according to one of claims 1 to 3, **characterized in that** aliphatic isocyanates are used as an isocyanate compound (A ii).

5. The melt adhesive according to one of claims 1 to 4, **characterized in that** OH-functional esters of (meth)acrylic acid are used as a low molecular compound B).

6. The melt adhesive according to one of claims 1 to 5, **characterized in that** 2 to 35% by moles of mono- or di-functional alcohols are used as a compound (C).

7. The melt adhesive according to one of claims 1 to 6, **characterized in that** 5 to 25% by moles of radical photo-initiators (D) are used, which have a primary OH group.

8. The melt adhesive according to one of claims 1 to 7, **characterized in that**, additionally, up to 5% by weight of unbound initiators are contained.

9. The melt adhesive according to one of claims 1 to 8, **characterized in that**, additionally, polymers based on polyesters, polyethers, polyamides or polyolefins with vinyl groups are contained, and/or resins, stabilizers, plasticizers as well as other photo-initiators are contained as auxiliaries.

10. The melt adhesive according to one of claims 1 to 9, **characterized in that** the melt adhesive has perviousness to steam of more than 500 g/m²d, in particular, more than 1,000 g/m²d.

11. The melt adhesive according to claim 10, **characterized in that** polyether polyols, in particular with an ethylene oxide content of more than 25% by weight, are used as a polyol.

12. The melt adhesive according to one of claims 1 to 11, **characterized in that** the viscosity at the application temperature lies in the range from 200 to 200,000 mPa.s, in particular, from 200 to 3,000 mPa.s or from 5,000 to 10,000 mPa.s, in particular at 130°C.

13. The use of radiation cross-linkable melt adhesives on the basis of polyurethane prepolymers according to one of claims 1 to 12, for adhesively bonding sheet labels on metal, glass and/or plastic containers and for coating planar objects with pressure-sensitive adhesive layers.

14. The use according to claim 13 for adhesively bonding single-layer or multilayer labels or shrinkable labels on bottles or cans.

15. The use according to claim 13 for coating labels, strips, or medicinal planar objects, such as patches and bandages, with a pressure-sensitive adhesive layer.

## Revendications

1. Adhésifs thermofusibles réticulables par exposition à un rayonnement, contenant plus de 30 %, rapportés à l'adhésif thermofusible, d'au moins un polymère de polyuréthane qui contient au moins un groupe réactif polymérisable par exposition à un rayonnement, que l'on prépare par mise en réaction
(A) d'un prépolymère réactif de polyuréthane comprenant deux ou trois groupes NCO par molécule, que l'on prépare à partir i) d'au moins un polyol difonctionnel ou trifonctionnel choisi parmi des polyéthers, des polyesters, des polyoléfines, des polyacrylates ou des polyamides, possédant une masse molaire entre 200 et 50.000 g/mol, que l'on fait réagir avec ii) un excès d'au moins un diisocyanate ou un triisocyanate dont la masse molaire est inférieure à 1000 g/mol ;
(B) de 22 à 90 mol % d'au moins un composé (B) à bas poids moléculaire contenant une liaison double apte à une polymérisation radicalaire et un groupe réactif vis-à-vis de groupes NCO ; et
(C) de 1 à 50 mol % d'au moins un composé (C) qui présente au moins un groupe réactif vis-à-vis de groupes NCO, mais aucun groupe polymérisable dans des conditions radicalaires, possédant une masse molaire de 32 à 5000 g/mol ; et
(D) de 5 à 50 mol % d'au moins un photoinitiateur radicalaire (D) qui présente un groupe OH primaire ou secondaire ;
les indications se rapportant aux groupes NCO du prépolymère de polyuréthane,
et la somme de B, C, D devant s'élever à 100 mol %,
ainsi que, de manière facultative, d'autres substances auxiliaires.

2. Adhésif thermofusible selon la revendication 1, **caractérisé en ce que** l'adhésif thermofusible est essentiellement exempt de groupes isocyanate.

3. Adhésif thermofusible selon l'une quelconque des revendications 1 à 2, **caractérisé en ce que**, à titre de polyols (A i), on met en oeuvre des polyétherdiols et/ou des polyesterdiols possédant une masse molaire de 200 à 20.000 g/mol.

4. Adhésif thermofusible selon l'une quelconque des revendications 1 à 3, **caractérisé en ce que**, à titre de composé d'isocyanate (A ii), on met en oeuvre des isocyanates aliphatiques.

5. Adhésif thermofusible selon l'une quelconque des revendications 1 à 4, **caractérisé en ce que**, à titre de composé (B) à bas poids moléculaire, on met en oeuvre des esters à fonctionnalité OH de l'acide (méth)acrylique.

6. Adhésif thermofusible selon l'une quelconque des revendications 1 à 5, **caractérisé en ce que**, à titre de composé (C), on met en oeuvre de 2 à 35 mol % d'alcools monofonctionnels ou difonctionnels.

7. Adhésif thermofusible selon l'une quelconque des revendications 1 à 6, **caractérisé en ce qu'**on met en oeuvre de 5 à 25 mol % de photoinitiateurs radicalaires (D) qui présentent un groupe OH primaire.

8. Adhésif thermofusible selon l'une quelconque des revendications 1 à 7, **caractérisé en ce qu'**il contient en outre jusqu'à 5 % en poids d'initiateurs non liés.

9. Adhésif thermofusible selon l'une quelconque des revendications 1 à 8, **caractérisé en ce qu'**il contient en outre des polymères à base de polyesters, de polyéthers, de polyamides ou de polyoléfines comprenant des groupes vinyliques et/ou, à titre de substances auxiliaires, des résines, des stabilisateurs, des plastifiants ainsi que d'autres photoinitiateurs.

10. Adhésif thermofusible selon l'une quelconque des revendications 1 à 9, **caractérisé en ce que** l'adhésif thermofusible présente une perméabilité à la vapeur d'eau supérieure à 500 g/m²d, en particulier supérieure à 1000 g/m²d.

11. Adhésif thermofusible selon la revendication 10, **caractérisé en ce que**, à titre de polyol, on met en oeuvre des polyétherpolyols, en particulier dont la teneur en oxyde d'éthylène est supérieure à 25 % en poids.

12. Adhésif thermofusible selon l'une quelconque des revendications 1 à 11, **caractérisé en ce que** la viscosité à la température d'application se situe dans la plage de 200 à 200.000 mPas, en particulier de 200 à 3000 mPas ou de 5000 à 10.000 mPas, en particulier à 130 °C.

13. Utilisation d'adhésifs thermofusibles réticulables par exposition à un rayonnement, à base de prépolymères de polyuréthane selon l'une quelconque des revendications 1 à 12, pour le collage d'étiquettes pelliculaires sur des emballages en métal, en verre et/ou en matière synthétique et pour l'enduction d'objets plats avec des couches autoadhésives.

14. Utilisation selon la revendication 13, pour le collage d'étiquettes monocouches ou multicouches ou d'étiquettes rétractables sur des bouteilles ou sur des boîtes.

15. Utilisation selon la revendication 13, pour l'enduction d'étiquettes, de bandes ou d'objets plats médicaux, tels que des emplâtres et des bandages, avec une couche autoadhésive.
